Europäisches Patentamt

European Patent Office

Office européen des brevets

(11) Veröffentlichungsnummer: **0 164 537**
**B1**

(12) **EUROPÄISCHE PATENTSCHRIFT**

(45) Veröffentlichungstag der Patentschrift: 11.07.90

(21) Anmeldenummer: 85104996.5

(22) Anmeldetag: 25.04.85

(51) Int. Cl.⁵: **C 04 B 37/02**, B 23 K 35/00, B 04 B 1/20

(54) **Verbindung von hochverschleissfesten Platten, insbesondere Keramikplatten, mit einem vor Verschleiss zu schützendem Träger.**

(30) Priorität: 14.06.84 DE 3422097

(43) Veröffentlichungstag der Anmeldung:
18.12.85 Patentblatt 85/51

(45) Bekanntmachung des Hinweises auf die Patenterteilung:
11.07.90 Patentblatt 90/28

(84) Benannte Vertragsstaaten:
DE FR GB IT SE

(56) Entgegenhaltungen:
EP-A-0 038 072
EP-A-0 038 584
CH-A- 221 365
DE-A-2 165 696
DE-A-2 417 478
US-A-4 003 115

(73) Patentinhaber: Klöckner-Humboldt-Deutz Aktiengesellschaft
Deutz-Mülheimer-Strasse 111 Postfach 80 05 09
D-5000 Köln 80 (DE)

(72) Erfinder: Partz, Klaus-Dieter, Dr.
Karl-Huschens-Strasse 17
D-5653 Leichlingen (DE)

(74) Vertreter: Beisner, Klaus, Dipl.-Ing. et al
c/o KHD Humboldt Wedag AG Patente und Lizenzen Wiersbergstrasse Postfach 91 04 57
D-5000 Köln 91 (DE)

EP 0 164 537 B1

Courier Press, Leamington Spa, England.

## Beschreibung

Die Erfindung bezieht sich auf eine Verbindung von hochverschleißfesten Platten, insbesondere Keramikplatten, mit der Wendel der Förderschnecke einer Schneckenzentrifuge.

Aus der US-Patentschrift 4,003,115 ist eine Verbindung von hochverschleißfesten Platten mit der Wendel einer Schneckenzentrifuge bekannt, bei der in den Raum zwischen der hochverschleißfesten Platte und der Wendel der Förderschnecke eine pulverförmige Mischung aus Chrom und Nikkel oder aus Wolframcarbid und Nickel unter Flammenerhitzung eingebracht wird. Diese bekannte Art der Verbindung von hochverschleißfesten Platten mit der Wendel der Förderschnecke ist jedoch nicht nur sehr kompliziert, sondern ermöglicht auch keine gleichmäßige Verteilung des pulverförmigen Verbundwerkstoffes zwischen der verschleißfesten Platte und der Wendel der Förderschnecke. Auch kann es beim Erhitzen der pulverförmigen Materialien zur Bildung von Hohlräumen kommen, in die im Betrieb der Zentrifuge aggresive Medien oder dergleichen eindringen, so daß hierdurch eine ausreichend starke, insbesondere sichere und dauerhafte Verbindung der hochverschleißfesten Platten mit der Wendel der Förderschnecke nicht erreicht werden kann.

Die Aufgabe der Erfindung besteht daher darin, eine feste und dauerhafte Verbindung von hochverschleißfesten Platten, insbesondere Keramikplatten, mit der Wendel der Förderschnecke einer Schneckenzentrifuge in besonders einfacher und kostensparender Weise zu ermöglichen.

Diese Aufgabe wird dadurch gelöst, daß die hochverschleißfeste Platte mit der Wendel der Förderschnecke durch einen Verbundwerkstoff, der aus zwei Lötfolien mit einem dazwischen befindlichen plattenförmig ausgebildeten Werkstoff aus Preßmetall oder Sintermetall, oder mit einem dazwischen befindlichen Werkstoff aus Metallgewebe besteht, verbunden ist. Durch diese Maßnahmen wird zwischen der hochverschleißfesten Platte und der Wendel der Förderschnecke eine Art Mischkristallschicht gebildet, die einerseits die hochverschleißfeste Platte fest mit der Schneckenwendel verbindet und andererseits die Wärmedehnungsunterschiede zwischen der hochverschleißfesten Platte und der Schneckenwendel kompensiert. Der besondere Vorteil dieser erfindungsgemäßen Maßnahmen besteht darin, daß ohne besondere Vorbehandlung und mit geringem Kostenaufwand durch einfaches Löten oder dergleichen eine feste und sichere Verbindung der verschleißfesten Platten, insbesodere Keramikplatten, mit der Wendel der Förderschnecke einer Schneckenzentrifuge erreicht wird.

Die Verbindung hochverschleißfester Platten mit der Wendel einer Förderschnecke wird nachfolgend anhand eines in der Zeichnung schematisch dargestellten Ausführungsbeispieles näher erläutert.

Es zeigen:

Fig. 1 eine verschleißfeste Platte vor der festen Verbindung mit der Schneckenwendel,

Fig. 2 die hochverschleißfeste Platte nach der festen Verbindung mit der Schneckenwendel gemäß Fig. 1.

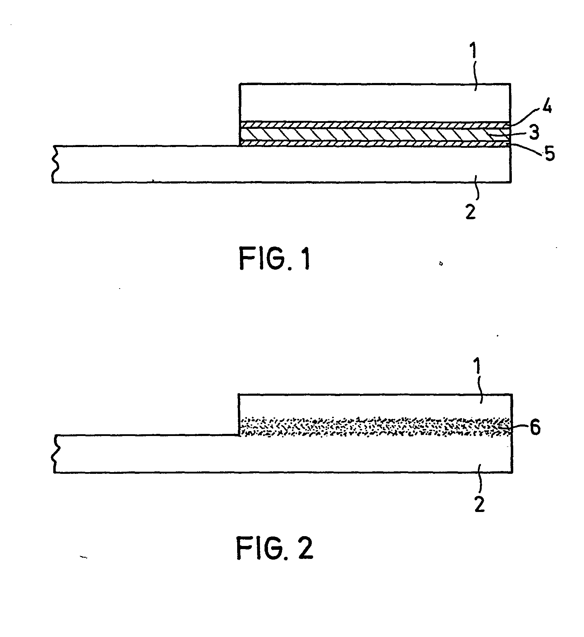

Wie Fig. 1 zeigt, ist zwischen einer hochverschleißfesten Platte (1), insbesondere Keramikplatte, und der Schneckenwendel (2) einer Schneckenzentrifuge ein Verbundwerkstoff (3) zwischen Lötfolien (4) und (5) eingebettet.

Dieser zwischen der hochverschleißfesten Platte und der Schneckenwendel (2) eingebettete verbundwerkstoff (3) mit den Lötfolien (4) und (5) wird durch Erhitzen, zum Beispiel auf etwa 800 bis 900°C, zu einem in Fig. 2 dargestellten Verband (6) verformt. Der Verbundwerkstoff kann hierbei sehr vorteilhaft entweder aus einem metallischen Mehrkomponentenwerkstoff, so zum Beispiel aus Preßmetall, insbesondere aus Kupfer oder Chrom-Nickel-Stahl, bestehen. Auch kann es gegebenenfalls zweckmäßig sein, einen aus porösen Materialien, zum Beispiel Sintermetall, bestehenden Verbundwerkstoff zu verwenden.

Ferner ist es auch möglich, einen aus Metallgewebe bestehenden Verbundwerkstoff zur festen Verbindung der hochverschleißfesten platte (1) mit der Schneckenwendel (2) einzusetzen. Gegebenenfalls kann als Verbundwerkstoff auch Kunststoff, Kunstharz oder dergleichen verwendet werden.

Bei der Verwendung von Preßmetall ist es besonders zweckmäßig, ein Preßmetall mit einem hohen Porenvolumen zu benutzen, um dadurch eine besonders gute Verbindung zwischen dem Lot und dem Preßmetall zu erreichen. Die Schichtstärke des metallischen Verbundwerkstoffes richtet sich je nach den Anforderungen der Keramik-Metall-Kombination.

Die Verbindung der hochverschleißfesten Platte (1) mit der Schneckenwendel (2) mit Hilfe des erfindungsgemäßen Verbundwerkstoffes kann sowohl durch einmaliges Erhitzen, d. h. gleichzeitig, oder durch stufenweises Erhitzen, d. h. Löten, unter Verwendung von Loten mit stark unterschiedlichen Arbeitstemperaturen vorgenommen werden.

Dadurch, daß gemäß der Erfindung die hochverschleißfesten Platte (1) mit der Wendel (2) der Förderschnecke durch einen Verbundwerkstoff, der aus zwei Lötfolien mit einem dazwischen befindlichen plattenförmig ausgebildeten Werkstoff aus Preßmetall oder Sintermetall, oder mit einem dazwischen befindlichen Werkstoff aus Metallgewebe besteht, verbunden ist, wird einerseits sehr vorteilhaft die wechselseitige Benetzung und Bindung zwichen der hochverschleißfesten Platte (1) und der Schneckenwendel (2) ermöglicht, und andererseits können sich die stark unterschiedlichen, thermisch bedingten Dehnungen, beispielsweise von Keramik und Metall, im Verbundwerkstoff abbauen.

Im übrigen zeichnen sich die erfindungsgemäßen Maßnahmen auch dadurch aus, daß sie eine feste und sichere Verbindung von hochverschleißfesten Platten, insbesondere Keramikplatten, nicht nur an Schneckenwendeln einer Schneckenzentrifuge ermöglichen, sondern, daß sie auch eine feste und sichere Verbindung von hochverschleißfesten Platten an beliebig anderen Trägern an Ort und Stelle in einfacher Weise ermöglichen.

## Patentansprüche

1. Verbindung von hochverschleißfesten Platten, insbesondere Keramikplatten, mit der Wendel der Förderschnecke einer Schneckenzentrifuge, dadurch gekennzeichnet, daß die hochverschleißfeste Platte (1) mit der Wendel (2) der Förderschnecke durch einen Verbundwerkstoff (3), der aus zwei Lötfolien (4) und (5) mit einem dazwischen befindlichen plattenförmig ausgebildeten Werkstoff (3) aus Preßmetall oder Sintermetall, oder mit einem dazwischen befindlichen Werkstoff (3) aus Metallgewebe besteht, verbunden ist.

2. Verbindung nach Anspruch 1, dadurch gekennzeichnet, daß als Werkstoff (3) eine Chrom-Nickel-Stahl-Verbindung eingesetzt wird.

## Revendications

1. Liaison de plaques très résistantes à l'usure, particulièrement, plaques céramiques, avec l'hélice de la vis sans fin d'une centrifugeuse à vis, caractérisée par le fait que la plaque très résistante à l'usure (1) est liée à l'hélice (2) de la vis sans fin par un matériau composite (3) qui est constitué de deux feuilles à braser (4) et (5), entre lesquelles se trouve un matériau en forme de plaque (3) en métal coulé ou en métal fritté ou un matériau (3) en toile métallique.

2. Liaison selon la revendication 1, caractérisé par le fait qu'une liaison en acier au chrome-nickel est mise en oeuvre pour former le matériau (3).

## Claims

1. Connection of highly wear-resistant plates, more particularly ceramics plates, to the helix of the screw conveyer of a screw centrifuge, characterised in that the highly wear-resistant plate (1) is connected to the helix (2) of the screw conveyer by a composite material (3), which comprises two films of solder (4) and (5) having therebetween a plate-shaped material (3) made of compressive metal or sinter metal, or having therebetween a material (3) made of metal gauze.

2. Connection according to claim 1, characterised in that a chromium-nickel steel compound is used as the material (3).

FIG. 1

FIG. 2